# EUROPEAN PATENT APPLICATION

(11) **EP 2 410 493 A2**
(43) Date of publication of application: **25.01.2012**
(21) Application number: 11171637.9
(22) Date of filing: 28.06.2011
(51) Int. Cl.: G06T 19/00

(54) **Apparatus and method for providing augmented reality using additional data**

(30) Priority: 23.07.2010 KR 20100071623
(71) Applicant: Pantech Co., Ltd, Mapo-gu, Seoul 121-270 (KR)
(72) Inventor: Jen, Sung-Woon, 121-270 Seoul (KR); Kang, Shin-Rok, 121-270 Seoul (KR); Kim, Jae-Mong, 121-270 Seoul (KR); Kim, Hyun-Kang, 121-270 Seoul (KR); Park, Hoon-Min, 121-270 Seoul (KR); Yoo, Yong-Gil, 121-270 Seoul (KR); Lee, Kyu-Jin, 121-270 Seoul (KR); Cho, Hwang-Joo, 121-270 Seoul (KR)
(74) Representative: Jordan, Volker Otto Wilhelm

(57) **Abstract**

An augmented reality (AR) providing apparatus includes a first data acquiring unit to acquire first data of a target object, a second data acquiring unit to acquire second data, and an image processor to obtain a representative image based on the first data and to modify the representative image based on the second data. A method for providing AR includes acquiring first data for a target object, acquiring second data from a source associated with the target object or a user of an AR providing apparatus, obtaining a representative image related to the first data, and modifying the representative image based on the second data.

## Description

### CROSS-REFERENCE TO RELATED APPLICATION

This application claims priority from and the benefit under 35 U.S.C. §119(a) of a Korean Patent Application No. 10-2010-0071623, filed on July 23, 2010, which is incorporated by reference for all purposes as if fully set forth herein.

### BACKGROUND

### FIELD

The following description relates to a technique for processing augmented reality (AR) data and images to implement AR.

### DISCUSSION OF THE BACKGROUND

Augmented reality (AR) is a computer graphic technique of synthesizing virtual objects or information with a real environment so that the virtual objects or information are shown as if they were present in a real environment.

AR is provided by synthesizing virtual objects with the real world, and thus presenting information that may be difficult to be shown in the real world. Unlike existing virtual reality (VR) that may be limited in application to virtual spaces and objects, AR may be applied to real environments.

Due to AR's characteristic, AR can be applied to real environments as well as the existing virtual environments, unlike the conventional VR that may be limited in application to virtual environments, such as games. Thus, AR technology has increasingly attracted attention as a next-generation display technique suitable for ubiquitous environments.

However, as the amount of information that may be synthesized with virtual objects increases more and more, a user may be inconvenienced in the amount of synthesized information the user has to check to identify desired information. In other words, since a large amount of information may be provided in a fragmented manner, the existing AR may have difficulties in providing information that a user may be seeking.

### SUMMARY

Exemplary embodiments of the present invention provide an apparatus and a method for providing augmented reality through use of additional data.

Additional features of the invention will be set forth in the description which follows, and in part will be apparent from the description, or may be learned by practice of the invention.

Exemplary embodiments of the present invention provide, an augmented reality (AR) providing apparatus including a first data acquiring unit to acquire first data of a target object; a second data acquiring unit to acquire second data; and an image processor to obtain a representative image based on the first data and to modify the representative image based on the second data.

Exemplary embodiments of the present invention provide an augmented reality (AR) providing apparatus including a first data acquiring unit to acquire first data of a target object; a second data acquiring unit to acquire second data; and an image processor to obtain a representative image related to the first data, to obtain an additional image related to the second data, and to synthesize the representative image with the additional image to create a synthesized image.

Exemplary embodiments of the present invention provide a method for providing an augmented reality (AR) including acquiring first data for a target object; acquiring second data from a source associated with the target object or a user of an AR providing apparatus; obtaining a representative image related to the first data; and modifying the representative image based on the second data.

Exemplary embodiments of the present invention provide a method for providing an augmented reality (AR) including acquiring first data for a target object; acquiring second data; obtaining a representative image based on the first data; obtaining an additional image related to the second data; and synthesizing the representative image with the additional image to create a synthesized image.

ln particular, according to the invention and its different aspects inter alia the following items are provided:
1. An augmented reality (AR) providing apparatus comprising:
   a first data acquiring unit to acquire first data of a target object;
   a second data acquiring unit to acquire second data; and
   an image processor to obtain a representative image based on the first data and to modify the representative image based on the second data.
2. The AR providing apparatus of item 1, wherein the image processor compares the first data with the second data to analyze the first data in association with the second data and then modifies the representative image based on the result of the analysis.
3. The AR providing apparatus of item 1,
   wherein the second data comprises at least one of:
   external data provided from outside the AR providing apparatus,
   and internal data stored in the AR providing apparatus.
4. The AR providing apparatus of item 3, wherein the external data comprises at least one of:
   sensor data of a camera, a GPS sensor, a microphone, a geomagnetic sensor, a gyroscope sensor, or an acceleration sensor; and
   network data of a network module.
5. The AR providing apparatus of item 3, wherein the internal data comprises at least one of:
   a user profile information, and
   status information of a device containing the AR providing apparatus.
6. The AR providing apparatus of item 1, further comprising an image display to display the modified representative image.
7. The AR providing apparatus of item 1, wherein the image processor modifies at least one of a shape, outline, size, color and brightness of the representative image.
8. The AR providing apparatus of item 1, wherein the image processor obtains the representative image by extracting an image file from the first data, or by extracting an image found through a search using information from the first data on a database containing image files.
9. An augmented reality (AR) providing apparatus, comprising:
   a first data acquiring unit to acquire first data of a target object;
   a second data acquiring unit to acquire second data; and
   an image processor to obtain a representative image related to the first data, to obtain an additional image related to the second data, and to synthesize the representative image with the additional image to create a synthesized image.
10. The AR providing apparatus of item 9, wherein the image processor compares the first data with the second data, analyzes the first data in association with the second data, and obtains the additional image based on the result of the analysis.
11. The AR providing apparatus of item 9, wherein the second data comprises at least one of:
   external data provided from outside the AR providing apparatus,
   and
   internal data stored in the AR providing apparatus.
12. The AR providing apparatus of item 11, wherein the external data comprises at least one of:
   sensor data of a camera, a GPS sensor, a microphone, a geomagnetic sensor, a gyroscope sensor or an acceleration sensor; and
   network data of a network module.
13. The AR providing apparatus of item 11, wherein the internal data comprises at least one of:
   user profile information, and
   status information of a device containing the AR providing apparatus.
14. The AR providing apparatus of item 9, further comprising an image display to display the synthesized image.
15. The AR providing apparatus of item 9, wherein the additional image is reduced in size and being located above or around the representative image.
16. The AR providing apparatus of item 9, wherein the image processor is further configured to obtain the additional image by extracting an image file from the second data, or by extracting an image found through a search using information from the second data on a database containing image files.
17. A method for providing an augmented reality (AR), comprising:
   acquiring first data for a target object;
   acquiring second data from a source associated with the target object or a user of an AR providing apparatus;
   obtaining a representative image related to the first data; and
   modifying the representative image based on the second data.
18. The method of item 17, wherein the second data comprises at least one of:
   external data provided from outside the AR providing apparatus, and internal data stored in the AR providing apparatus.
19. The method of item 18, wherein the external data comprises at least one of:
   sensor data of a camera, a GPS sensor, a microphone, a geomagnetic sensor, a gyroscope sensor or an acceleration sensor; and
   network data of a network module.
20. The method of item 18, wherein the internal data comprises at least one of:
   user profile information, and
   status information of a device containing the AR providing apparatus.
21. The method of item 17, further comprises modifying at least one of a shape, outline, size, color and brightness of the representative image.
22. The method of item 17, further comprises comparing the first data with the second data to analyze the first data in association with the second data, and obtaining the additional image based on the result of the analysis.
23. The method of item 17, wherein the obtaining of the representative image further comprises extracting an image file from the first data; or
   extracting an image found through a search using information from the first data on a database containing image files.
24. A method for providing an augmented reality (AR), comprising:
   acquiring first data for a target object;
   acquiring second data;
   obtaining a representative image based on the first data;
   obtaining an additional image related to the second data; and
   synthesizing the representative image with the additional image to create a synthesized image.
25. The AR providing method of item 24, wherein the second data comprises at least one of:
   external data provided from outside the AR providing apparatus, and internal data stored in the AR providing apparatus.
26. The AR providing method of item 25, wherein the external data comprises at least one of:
   sensor data of a camera, a GPS sensor, a microphone, a geomagnetic sensor, a gyroscope sensor or an acceleration sensor; and
   network data of a network module.
27. The AR providing method of item 25, wherein the internal data comprises at least one of:
   user profile information, and
   status information of a device containing the AR providing apparatus.
28. The AR providing method of item 24, further comprises creating the additional image so that the additional image is reduced in size and is located above or around the representative image.
29. The AR providing method of item 24, wherein obtaining the additional image further comprises extracting an image file from the second data; or
   extracting an image found through a search using information from the second data on a database containing image files.
30. The AR providing method of item 24, wherein the obtaining the additional image further comprises comparing the first data with the second data to analyze the first data in association with the second data, and obtaining the additional image based on the result of the analysis.

Preferred embodiments are also defined in the appended claim set.

It is to be understood that both foregoing general descriptions and the following detailed description are exemplary and explanatory and are intended to provide further explanation of the invention as claimed. Other features and aspects will be apparent from the following detailed description, the drawings, and the claims.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.
FIG. 1 is a diagram illustrating an augmented reality (AR) providing apparatus according to an exemplary embodiment of the invention.
FIG. 2 is a diagram illustrating an image processor according to an exemplary embodiment of the invention.
FIG. 3 is a diagram illustrating an example of an image processor according to an exemplary embodiment of the invention.
FIG. 4 shows a first data according to an exemplary embodiment of the invention.
FIG. 5 shows a second data according to an exemplary embodiment of the invention.
FIG. 6 is a flowchart illustrating an AR providing method according to an exemplary embodiment of the invention.
FIG. 7 is a flowchart illustrating an AR providing method according to an exemplary embodiment of the invention.
FIG. 8A illustrates a modified representative image according to an exemplary embodiment of the invention.
FIG. 8B illustrates a synthesized image according to an exemplary embodiment of the invention.

### DETAILED DESCRIPTION OF THE ILLUSTRATED EMBODIMENTS

The invention is described more fully hereinafter with references to the accompanying drawings, in which exemplary embodiments of the invention are shown. This invention may, however, be embodied in many different forms and should not be construed as limited to the embodiments set forth herein. Rather, these exemplary embodiments are provided so that this disclosure is thorough, and will fully convey the scope of the invention to those skilled in the art. It will be understood that for the purposes of this disclosure, "at least one of each" will be interpreted to mean any combination the enumerated elements following the respective language, including combination of multiples of the enumerated elements. For example, "at least one of X, Y, and Z" will be construed to mean X only, Y only, Z only, or any combination of two or more items X, Y, and Z (e.g. XYZ, XZ, YZ, X). Throughout the drawings and the detailed description, unless otherwise described, the same drawing reference numerals are understood to refer to the same elements, features, and structures. The relative size and depiction of these elements may be exaggerated for clarity, illustration, and convenience.

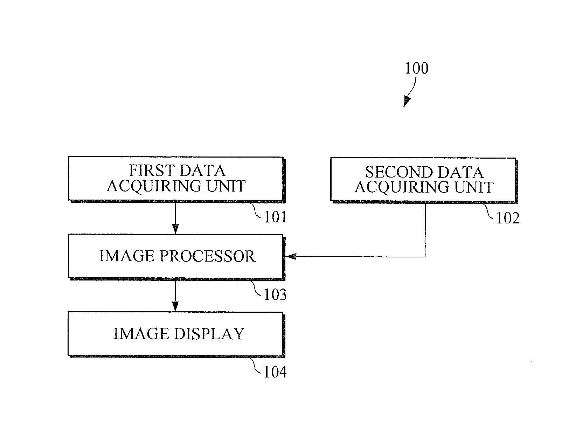

FIG. 1 is a diagram illustrating an augmented reality (AR) providing apparatus according to an exemplary embodiment of the invention.

As shown in FIG. 1, the AR providing apparatus 100 includes a first data acquiring unit 101, a second data acquiring unit 102, an image processor 103 and an image display 104.

The first data acquiring unit 101 acquires first data of a target object image. The target object may be any object of interest. For example, if a user captures an image of a particular area, the target object may be a building block or any particular object in the image. If the target object is identified, the first data acquiring unit 101 may acquire the first data related to the target object.

The first data of the target object may be various kinds of AR information related to the target object. For example, the AR information may include general attribute information of the target object including the address, phone number, hours of operation, type of business, and the like. In addition, the first data may be stored in a database that may be located in a separate server (not shown). Alternatively, the first data may also be stored in the AR providing apparatus 100 (not shown). Further, the first data may be provided in response to a request from the AR providing apparatus 100. For example, if the AR providing apparatus 100 is applied to a smart phone, the first data acquiring unit 101 may receive various AR information related to the target object that may be identified in the acquired image.

More specifically, if a user photographs a certain place using a camera installed in the smart phone, the target object image information may be identified and transmitted to the server housing the database. In response, the server may search its database to recognize the target object, and identify AR information related to the identified target object. Accordingly, if AR information is available for the identified target object, the AR information is extracted and provided to the AR providing apparatus 100. In an example, the extracted AR information include the address, phone number, menu information, hours of operation, logo, etc. of the target coffee shop identified in the photograph.

The second data acquiring unit 102 acquires second data that is different from the first data.

ln an example, the second data may be additional data that may not be provided in the first data. More specifically, if the first data is AR information extracted from an AR data providing server, the second data may be information that may not have been received from the AR data providing server as part of the first data. In addition, the second data may be more detailed AR information related to the target object, a subset of the first data, or a different set of AR information that may be stored in the AR data providing server.

For example, if the AR providing apparatus 100 is applied to a smart phone, the second data may include external data provided by a peripheral device of the smart phone and internal data stored in the smart phone. In an example, the external data may include input data or output data of various sensor modules or network modules, and the internal data may be an updatable user profile or a updatable device profile. More specifically, the external data may include sensor data obtained from a camera, a GPS sensor, a microphone, a geomagnetic sensor, a gyroscope sensor or an acceleration sensor, which may be installed in the AR providing apparatus 100. In addition, the external data may also include network data of a network module installed in the AR providing apparatus 100. Alternatively, the internal data may include a user profile that represents a user's identification information, preference information, and the like. ln addition, the internal data may include a device profile that represents status information of a terminal to which the AR providing apparatus 100 is applied.

The image processor 103 extracts a representative image that is based on the first data. For example, if the first data includes the name, address, phone number, logo, etc. of a specific coffee shop, the image processor 103 may extract the received logo as the representative image. Alternatively, the image processor 103 may use the name of the coffee shop included in the first data to search for a related image from the web, or select a reference image, such as a reference coffee mug icon, to provide a representative image.

Also, the image processor 103 may supplement the representative image by modifying the representative image, adding additional images to the representative image based on the second data, or a combination of both. Alternatively, the image processor 103 may provide supplementary images, icons, and the like based on the second data independent of the representative image. Exemplary use of second data to modify a representative image or to add additional images to the representative image may be variously applied according to use of the AR providing apparatus 100. For example, the image processor 103 may compare the first data with the second data, analyze the first data in association with the second data and then modify the representative image or add a specific icon to the representative image according to the results of the comparison or analysis.

More specifically, if the user is determined to be partial to "Coffee company

A" according to the user profile (second data), the representative image may be enlarged, outlined, colored, shaded, or the like to make the "Coffee company A" more distinctive from the other coffee shops or objects identified on an acquired image. In addition, if "Coffee company A" is determined to be wi-fi enabled, such information may be displayed as an additional image to supplement the representative image. The additional images provided based on the second data may be used to supplement the representative image whether or not the representative image is modified.

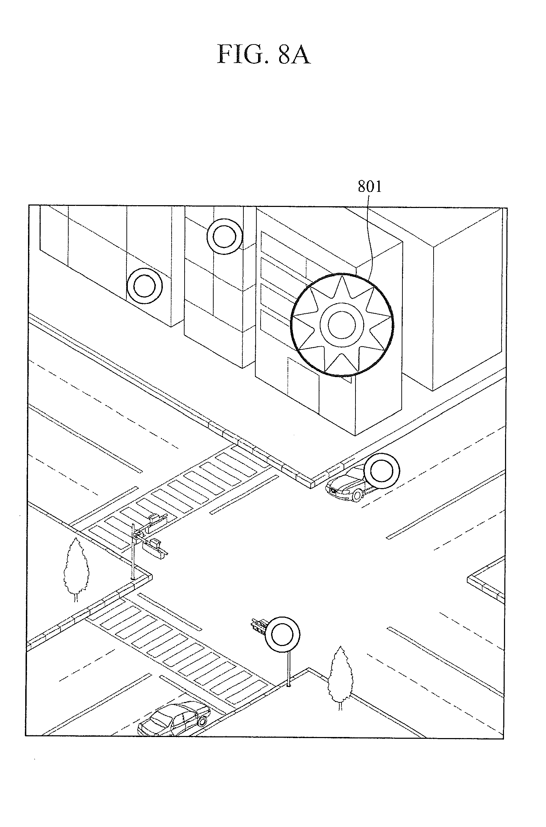

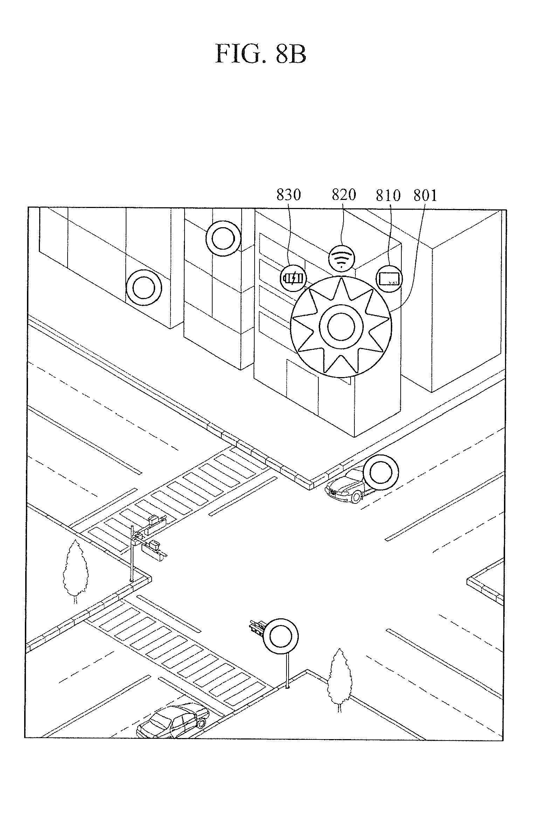

FIG. 8A and FIG. 8B illustrate examples of a modified representative image and a synthesized image of the representative image with multiple additional images surrounding the representative image according to an exemplary embodiment of the invention. As an example, referring to FIG. 8A, the image processor 102 may use the second data to modify the shape, outline, size, color or brightness of a representative image 801. As another example, referring to FIG. 8B, the image processor 103 may use the second data to extract additional images 810, 820 and 830 and add the additional images 810, 820 and 830 around a representative image 801. In an example, the additional images 810, 820 and 830 may be reference images, stored images, or images identified on a network.

Referring again to FIG. 1, the image display 104 may display the representative image as illustrated in FIG. 8A or the representative image along with additional images to supplement the representative image as illustrated in FIG. 8B. For example, the image display 104 may be a display panel or a touch display panel.

In this way, since the AR providing apparatus 100 displays an AR image related to a target object in as a modified representative image (as illustrated in FIG. 8A) or by adding additional images to a representative image using second data (as illustrated in FIG. 8B), the user may more quickly and easily obtain desired information.

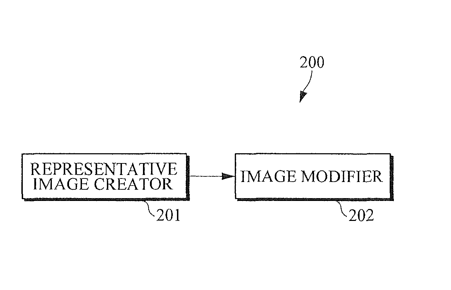

FIG. 2 is a diagram illustrating an image processor according to the exemplary embodiment of the invention.

Referring to FIG. 2, the image processor 200 includes a representative image creator 201 and an image modifier 202.

The representative image creator 201 obtains a representative image of a target object based on first data. For example, the representative image creator 201 may extract a specific image corresponding to the target object included in first data as a representative image. In an example, the specific image may be an icon, graphic image, or the like. As another example, the representative image creator 201 may use information included in first data, such as the name of a business, as a keyword to search for a related image from the web or a database storing reference images. The representative image creator 201 may also extract a reference image stored in a database. In an example, if the first data includes the name, address, phone number, menu information, hours of operation, and logo image of a target coffee shop, the representative image creator 201 may extract the logo of the coffee shop as the representative image.

The image modifier 202 modifies the shape, outline, size, color, brightness, etc. of the obtained representative image based on second data. For example, in the case where the first data relates to the target coffee shop and GPS information is acquired as the second data, the image modifier 202 may increase the logo size of the target coffee shop in proportion to the distance of the user to the coffee shop. As another example, if information of several coffee shops is acquired as first data, and a device profile (for example, a battery level) is acquired as second data, in the case where the battery level is below a reference threshold value, the image modifier 202 may analyze both the first data with the second data to find coffee shops where a battery charging service is provided. In addition, the image modifier 202 may then modify the logos of the coffee shops to a charger shape or thicken the outlines of the logos as illustrated in FIG. 8A.

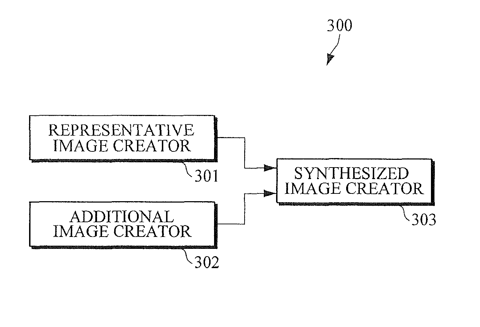

FIG. 3 is a diagram illustrating an image processor according to an exemplary embodiment of the invention. The image processor 300 may be an example of the image processor 103 illustrated in FIG. 1.

As shown in FIG. 3, the image processor 300 includes a representative image creator 301, an additional image creator 302 and a synthesized image creator 303.

The representative image creator 301 obtains a representative image for a target object based on first data. For example, the representative image creator 301 may extract a specific image, such as a logo of a coffee company, related to the target object included in first data as a representative image. As another example, the representative image creator 301 may use information included in first data, such as a business name, as a keyword to search for a related image from the web or to extract a reference image from a database storing reference images. In an example, if the first data includes the name, address, phone number, menu information, hours of operation, and logo image of a target coffee shop, the representative image creator 301 may extract the logo of the coffee shop as a representative image. Alternatively, if logo information is not provided, then the representative image creator 201 may use the business name included in the first data to search for the representative image data on the web or from a database storing reference images.

The additional image creator 302 obtains an additional image related to second data. Referring to FIG. 8B, the additional image may be various icons 810, 820 and 830 created based on the second data. For example, if a specific credit card is accepted at the target business location, a credit card image 810 may be displayed as an additional image. As another example, if a Wi-Fi network service is provided at the target business location, a Wi-Fi icon 820 may be displayed as an additional image. As another example, if a battery level is below a reference threshold value, a charging icon 830 may be displayed as an additional image. The additional images may be obtained if the additional image creator 302 determines the second data to extract. In an example, additional images may be extracted from a database storing reference icon images, or may be searched for on the web through a network.

The synthesized image creator 303 synthesizes the representative image obtained by the representative image creator 301 with the additional images obtained by the additional image creator 302. In an example, the synthesized image creator 303 may reduce the sizes of the additional images and position the size-reduced additional images above or around the representative image, which is illustrated in FIG. 8B.

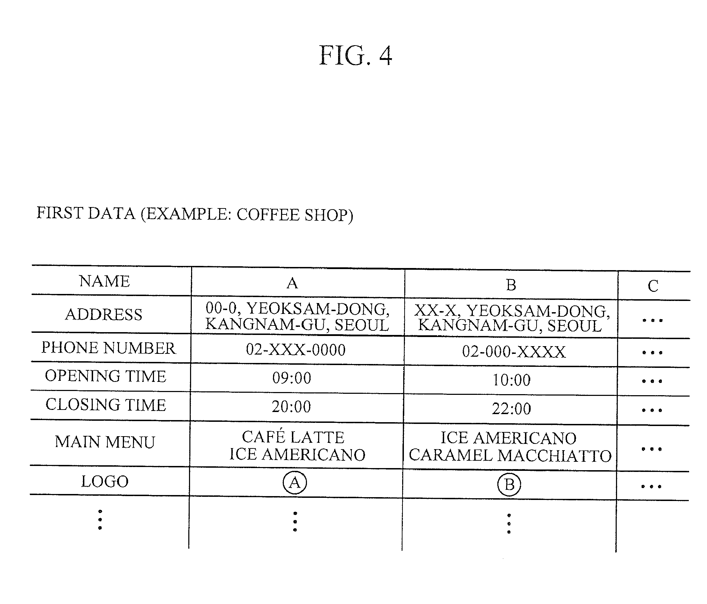

FIG. 4 shows a first data according to an exemplary embodiment of the invention.

Referring to FIG. 1, FIG. 2, FIG. 3, and FIG. 4, the first data may be various kinds of AR information related to target coffee shops, which correlate to a user's targets of interest identified in an acquired image. For example, it is assumed that a user photographs a certain place using a smart phone in which the AR providing apparatus 100 is installed to acquire an image. Further, it is assumed at least one target object is included in the acquired image.

In an example, the first data acquiring unit 101 may acquire the names, addresses, phone numbers, hours of operation, menu information, logos, etc. of target coffee shops identified in the acquired image as first data. However, the enumerated types of information that may be categorized as a first data is provided as an example only and not limited to such designation. Additional information, such as, wireless communication network type, whether a mobile phone battery charging service is provided, etc. may also be acquired as first data. Further, the image processor 103 may extract the logos of the coffee shops using the first data as representative images, and display the logos of the coffee shops on the image display 104. The logos of the coffee shops, as representative images, may be displayed after being modified based on information contained in the second data. ln addition, the logos of the coffee shops may be displayed with additional icons based on the information contained in the second data.

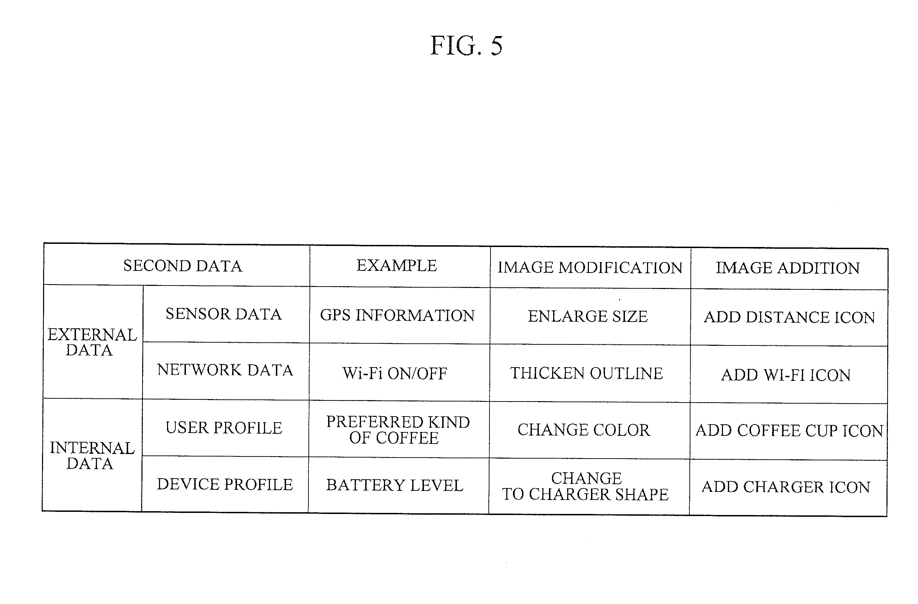

FIG. 5 shows a second data according to an exemplary embodiment of the invention.

Referring to FIG. 1, FIG. 4, and FIG. 5, the second data includes external data and internal data. As shown in FIG. 5, the external data includes sensor data and network data. In an example, if the AR providing apparatus 100 is applied to a smart phone, the sensor data may be obtained from a camera, a GPS sensor, a microphone, a geomagnetic sensor, a gyroscope sensor or an acceleration sensor, which may be installed in a mobile terminal, such as a smart phone. In addition, the network data may include opt-in broadcast information, which a peripheral environment spreads out to one or more users, or Social Networking Strategy (SNS) information like web search or TwitterⓇ.

As shown in FIG. 5, the internal data includes a user profile and a device profile. The user profile may include an identifier, name card information, E-mail address, schedule, preference, and other similar information related to the user. The device profile may include a terminal's status, such as a communication network, a battery level, a current time, a device version, and other similar information.

As illustrated in FIG. 4, the logos of coffee shops A, B, and C are extracted as representative images and displayed on the display 104.

In an example, if GPS information is used as second data, the image processor 103 may increase the logo size of the coffee shop A as a user gets closer to the coffee shop A. Alternatively, the image processor 103 may display a distance icon above the logo of the coffee shop A to display the distance information of the user as the user approaches the coffee shop A.

As another example, if the availability of a Wi-Fi service is used as second data, the image processor 103 may analyze both the second data with the first data to detect a coffee shop B as the coffee shop where Wi-Fi service is available, and then thicken the outline of the logo of the coffee shop B, or display a Wi-Fi icon above the logo of the coffee shop B.

As another example, if information of a user's coffee preference is stored in a user profile as second data, the image processor 103 may compare the second data with the first data (for example, a menu information) to detect a coffee shop C that sells the user's preferred coffee. Then, the image processor 103 may change the color of the logo of the coffee shop C or display a coffee cup icon around the logo of the coffee shop C. At this time, if reviews from other users are included in the first data, the coffee shop C may be detected by comparing and analyzing the user profile as the second data with the reviews from other users as the first data.

In another example, if battery level information stored in the device profile is used as the second data and if availability of battery charging service is used as the first data, the image processor 103 may detect, the coffee shop A where a battery charging service is provided, if a battery level is below a reference threshold value. Then, the image processor 103 may change the logo of the coffee shop A to a charger shape or display a charger icon around the logo of the coffee shop A.

The current example has been provided for convenience of description, and it will be apparent to those skilled in the art that any other methods can be used to display the content of the first data using the second data for user's recognition.

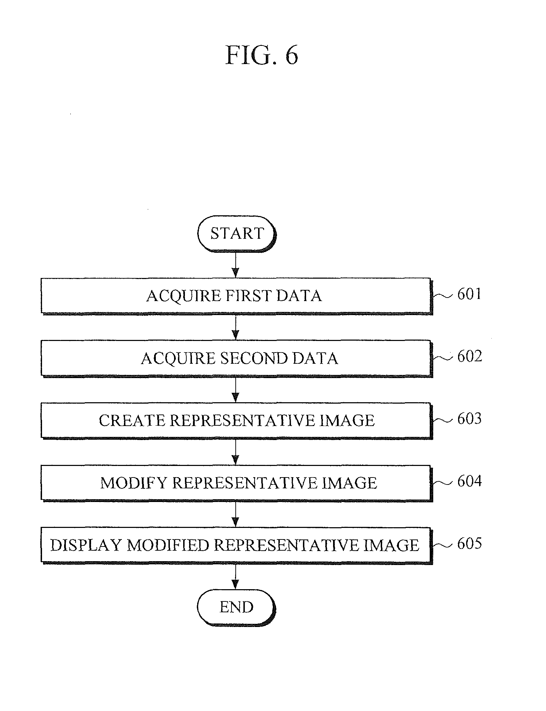

FIG. 6 is a flowchart illustrating an AR providing method according to an exemplary embodiment of the invention. The AR providing method may be performed by the AR providing apparatus illustrated in FIG. 1. The AR providing method will be described with reference to FIG. 1, FIG. 2, FIG. 3, FIG. 4, FIG. 5, and FIG. 6, below.

First, first data is acquired (operation 601). For example, the first data acquiring unit 101 may receive AR information related to a target object from an external server.

Then, second data that is different from the first data is acquired (operation 602) from an external server. In an example, the second data acquiring unit 102 may acquire external data from a camera, a microphone, a GPS sensor, a geomagnetic sensor, a gyroscope sensor, an acceleration sensor, and a network module. More specifically, exemplary external data may include, image information, voice information, sensor information, transmission data, and the like collected by the data acquiring unit 102. In addition, the second data acquiring unit 102 may also acquire internal data such as a user profile and a device profile.

Then, a representative image related to the first data is created (operation 603). For example, the image processor 103 may extract a logo image from the acquired first data as a representative image. Alternatively, the image processor may search for a reference image based on information included in the first data from the web or from database storing reference images.

Then, the representative image is modified based on the second data (operation 604). For example, the image processor 103 compares and analyzes the first data with respect to the second data to identify target objects meeting the criteria of both the first data and the second data. If the identified target object meets the criteria of both the first data and the second data, the shape, outline, size, color, brightness, etc. of the representative image of the target object may be modified.

Next, the modified representative image is displayed (operation 605). For example, by displaying the modified representative image on the image display 104, a user's desired information may be displayed to implement AR.

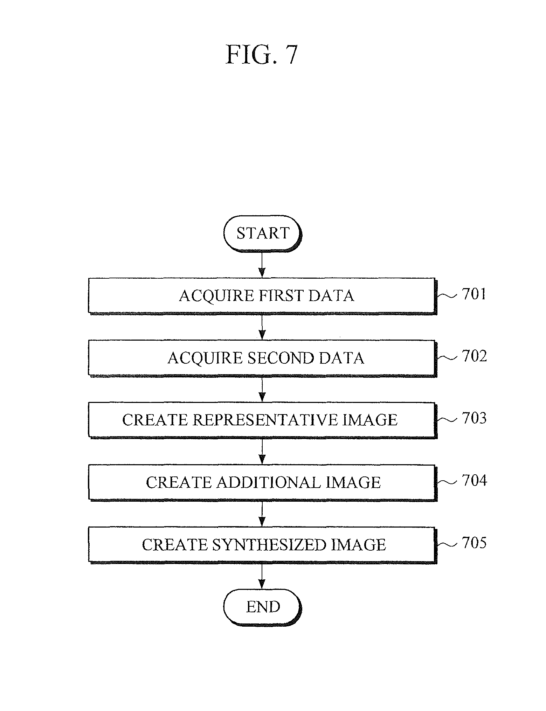

FIG. 7 is a flowchart illustrating an AR providing method according to an exemplary embodiment of the invention. The AR providing method may be performed by the AR providing apparatus illustrated in FIG. 1. The AR providing apparatus will be described with reference to FIG. 1, FIG. 2, FIG. 3, FIG. 4, FIG. 5, FIG. 6 and FIG. 7, below.

A first data is initially acquired (operation 701). In an example, the first data acquiring unit 101 may receive AR information for a target object from an external server.

Then, second data that is different from the first data is acquired (operation 702). For example, the second data acquiring unit 102 may acquire external data from a camera, a microphone, a GPS sensor, a geomagnetic sensor, a gyroscope sensor, an acceleration sensor, and a network module. More specifically, exemplary external data may include, image information, voice information, sensor information, transmission data, and the like collected by the data acquiring unit 102. In addition, the second data acquiring unit 102 may also acquire internal data such as a user profile and a device profile.

Then, a representative image related to the first data is created (operation 703). For example, the image processor 103 may extract a logo image from the acquired first data as a representative image. Alternatively, the image processor 103 may search for a reference image based on information included in the first data from the web or from database storing reference images.

Then, an additional image related to the second data is created (operation 704). For example, the image processor 103 may compare and analyze the first data with respect to the second data and create icon images 810, 820 and 830 as additional images, which are illustrated in FIG. 8B. The icon images 810, 820 and 830 may be reference images or may be obtained from the web by using the information found in the second data as a keyword.

Successively, a synthesized image is created based on the representative image, which may or may not be modified, and one or more additional images (operation 705). For example, the image processor 103 may reduce the size of one or more additional images to be smaller than the representative image and then add one or more additional images above or around the representative image.

Then, the synthesized image is displayed (operation 706). For example, by displaying the representative image, which may or may not be modified, along with one or more additional images, on the image display 104, a user's desired information is displayed to implement AR.

The processes, functions, methods and/or software described above may be recorded, stored, or fixed in one or more computer-readable storage media that includes program instructions to be implemented by a computer to cause a processor to execute or perform the program instructions. The media may also include, alone or in combination with the program instructions, data files, data structures, and the like. The media and program instructions may be those specially designed and constructed, or they may be of the kind well-known and available to those having skill in the computer software arts. Examples of computer-readable media include magnetic media, such as hard disks, floppy disks, and magnetic tape; optical media such as CD ROM disks and DVDs; magneto-optical media, such as optical disks; and hardware devices that are specially configured to store and perform program instructions, such as read-only memory (ROM), random access memory (RAM), flash memory, and the like. Examples of program instructions include machine code, such as produced by a compiler, and files containing higher level code that may be executed by the computer using an interpreter. The described hardware devices may be configured to act as one or more software modules in order to perform the operations and methods described above, or vice versa. In addition, a computer-readable storage medium may be distributed among computer systems connected through a network and computer-readable codes or program instructions may be stored and executed in a decentralized manner.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.

An augmented reality (AR) providing apparatus includes a first data acquiring unit to acquire first data of a target object, a second data acquiring unit to acquire second data, and an image processor to obtain a representative image based on the first data and to modify the representative image based on the second data. A method for providing AR includes acquiring first data for a target object, acquiring second data from a source associated with the target object or a user of an AR providing apparatus, obtaining a representative image related to the first data, and modifying the representative image based on the second data.

## Claims

1. An augmented reality (AR) providing apparatus comprising:
a first data acquiring unit to acquire first data of a target object;
a second data acquiring unit to acquire second data; and
an image processor to obtain a representative image based on the first data and to modify the representative image based on the second data.

2. The AR providing apparatus of claim 1, wherein the image processor compares the first data with the second data to analyze the first data in association with the second data and then modifies the representative image based on the result of the analysis.

3. The AR providing apparatus of claim 1 or 2,
wherein the second data comprises at least one of:
external data provided from outside the AR providing apparatus, and internal data stored in the AR providing apparatus;
or/and wherein the external data comprises at least one of:
sensor data of a camera, a GPS sensor, a microphone, a geomagnetic sensor, a gyroscope sensor, or an acceleration sensor; and network data of a network module;
or/and wherein the internal data comprises at least one of:
a user profile information, and
status information of a device containing the AR providing apparatus.

4. The AR providing apparatus of one of claims 1 to 3, wherein the image processor modifies at least one of a shape, outline, size, color and brightness of the representative image.

5. The AR providing apparatus of one of claims 1 to 4, wherein the image processor obtains the representative image by extracting an image file from the first data, or by extracting an image found through a search using information from the first data on a database containing image files.

6. The augmented reality (AR) providing apparatus according to one of the preceeding claims 1 to 5,
wherein the image processor is adapted to obtain a representative image related to the first data, to obtain an additional image related to the second data, and to synthesize the representative image with the additional image to create a synthesized image.

7. The AR providing apparatus of claim 6, wherein the image processor compares the first data with the second data, analyzes the first data in association with the second data, and obtains the additional image based on the result of the analysis.

8. The AR providing apparatus of claim 6 or 7, wherein the second data comprises at least one of:
external data provided from outside the AR providing apparatus, and
internal data stored in the AR providing apparatus;
or/and wherein the external data comprises at least one of:
sensor data of a camera, a GPS sensor, a microphone, a geomagnetic sensor, a gyroscope sensor or an acceleration sensor; and
network data of a network module;
or/and wherein the internal data comprises at least one of:
user profile information, and
status information of a device containing the AR providing apparatus.

9. The AR providing apparatus of one of claims 6 to 8, wherein the additional image is reduced in size and being located above or around the representative image.

10. The AR providing apparatus of one of claims 6 to 9, wherein the image processor is further configured to obtain the additional image by extracting an image file from the second data, or by extracting an image found through a search using information from the second data on a database containing image files.

11. The AR providing apparatus of ione of claims 1 to 10, further comprising an image display to display the modified representative image or the synthesized image, respectively.

12. A method for providing an augmented reality (AR), comprising:
acquiring first data for a target object;
acquiring second data;
obtaining a representative image related to the first data; and
modifying the representative image based on the second data.

13. The method of claim 12, wherein the second data are acquired from a source associated with the target object or a user of an AR providing apparatus.

14. The method of claim 12 or 13, wherein the second data comprises at least one of:
external data provided from outside the AR providing apparatus, and internal data stored in the AR providing apparatus,
or/and wherein the external data comprises at least one of:
sensor data of a camera, a GPS sensor, a microphone, a geomagnetic sensor, a gyroscope sensor or an acceleration sensor; and
network data of a network module;
or/and wherein the internal data comprises at least one of:
user profile information, and
status information of a device containing the AR providing apparatus.

15. The method of one of claims 12 to 14, further comprising: modifying at least one of a shape, outline, size, color and brightness of the representative image;
or/and further comprising: comparing the first data with the second data to analyze the first data in association with the second data, and obtaining the additional image based on the result of the analysis.

16. The method of one of claims 12 to 15, wherein the obtaining of the representative image further comprises extracting an image file from the first data; or
extracting an image found through a search using information from the first data on a database containing image files.

17. The method for providing an augmented reality (AR) according to one of preceeding claims 12 to 16,
**characterized by**
obtaining a representative image based on the first data; obtaining an additional image related to the second data; and synthesizing the representative image with the additional image to create a synthesized image.

18. The AR providing method of item 17, wherein the second data comprises at least one of:
external data provided from outside the AR providing apparatus, and internal data stored in the AR providing apparatus,
or/and wherein the external data comprises at least one of:
sensor data of a camera, a GPS sensor, a microphone, a geomagnetic sensor, a gyroscope sensor or an acceleration sensor; and
network data of a network module;
or/and wherein the internal data comprises at least one of:
user profile information, and
status information of a device containing the AR providing apparatus.

19. The AR providing method of claim 17 or 18, further comprising: creating the additional image so that the additional image is reduced in size and is located above or around the representative image.

20. The AR providing method of one of claims 17 to 19, wherein obtaining the additional image further comprises extracting an image file from the second data; or
extracting an image found through a search using information from the second data on a database containing image files;
or/and wherein the obtaining the additional image further comprises comparing the first data with the second data to analyze the first data in association with the second data, and obtaining the additional image based on the result of the analysis.
